Europäisches Patentamt

European Patent Office

Office européen des brevets

(19)

(11) Veröffentlichungsnummer: **0 311 837 B1**

(12) **EUROPÄISCHE PATENTSCHRIFT**

(45) Veröffentlichungstag der Patentschrift: **02.01.91**

(51) Int. Cl.⁵: **F 16 C 7/00, B 29 C 57/06**

(21) Anmeldenummer: **88115940.4**

(22) Anmeldetag: **28.09.88**

(54) **Hohlprofil, insbesondere Rohr, aus langfaserverstärktem Kunststoff und Verfahren zur Herstellung dieses Hohlprofils.**

(30) Priorität: **10.10.87 DE 3734343**

(43) Veröffentlichungstag der Anmeldung:
**19.04.89 Patentblatt 89/16**

(45) Bekanntmachung des Hinweises auf die
Patenterteilung:
**02.01.91 Patentblatt 91/01**

(84) Benannte Vertragsstaaten:
**DE FR GB IT**

(56) Entgegenhaltungen:
**EP-A-0 028 978
DE-A-3 408 650
GB-A-1 330 313
US-A-3 484 900
US-A-3 638 979
US-A-3 986 810**

(73) Patentinhaber: **BAYER AG
D-5090 Leverkusen 1 Bayerwerk (DE)**

(72) Erfinder: **Kacza, Martin
Heissbergstrasse 1
D-5100 Aachen (DE)**
Erfinder: **Rest, Hartmut, Dr.
Am alten Broich 157
D-4018 Langenfeld (DE)**
Erfinder: **Born, Eberhard
Strundener Strasse 104
D-5000 Köln 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Die Erfindung bezieht sich auf ein Hohlprofil, insbesondere ein Rohr, aus langfaserverstärktem Kunststoff, welches an mindestens einem Ende ein integriertes Krafteinleitungselement aufweist, dessen Mantel aus einem Abschnitt des Hohlprofils selbst besteht und wobei dieser Mantel einen Kern mit Zuganker umgibt, und aus einer sich über den Umfang erstreckenden radialen Erweiterung des Hohlprofils besteht, welche an ihrem freien Ende wieder in eine Verengung übergeht; wobei der Kern als Spreizkörper ausgebildet ist, welcher mit dem darin geführten, als Spannglied ausgebildeten Ende des Zugankers korrespondiert, und wobei der Spreizkörper in gespanntem Zustand über die Länge der Erweiterung an dieser innen formschlüssig anliegt, sowie ein Verfahren zur Herstellung eines solchen Hohlprofils.

Es ist ein Hohlprofil mit formschlüssigem Krafteinleitungselement bekannt (DE—A 2 926 493), welches Längszug- und Längsdruckkräfte aufnimmt und zwar Längszugkräfte weitgehend nur über die Bewicklung mit annähernd axial ausgerichteten Fasern und Längsdruckkräfte weitgehend nur über das faserverstärkte Kernrohr. Einerseits wird nämlich durch die Bewicklung des bereits gehärteten Kernrohres keine ausreichende Vernetzung zwischen Bewicklung und Kernrohr geschaffen, sondern lediglich eine Klebeverbindung mit mäßiger Kraftübertragung in Längszug- und Längsdruckrichtung, und andererseits leitet die Schlaufenverbindung über die im Krafteinleitungselement angeordneten Stifte lediglich Zugkräfte in die Bewicklung ein.

Bei einer weiteren bekannten Ausführungsform (DE—A—3 400 043) wird die durch die Querschnittsveränderung hervorgerufene prinzipielle Schwächung des Laminates nicht durch andere Maßnahmen wirkungsvoll kompensiert.

Bei beiden Ausführungsformen läßt sich eine Einleitung von Biegemomenten, die der Festigkeit des eigentlichen Hohlprofils angepaßt wären, nicht durchführen, weil es in diesem Fall im Bereich der Krafteinleitungselemente durch die außen aufgesetzten Metallkappen zur Kerbung und damit zur Schwächung der äußeren Laminatschichten käme. Dem Verwender der vorbekannten Hohlprofile ist es nicht möglich, mechanische und geometrische Größen der verwendeten metallischen Anschlußzapfen, wie Dämpfungsverhalten und Zapfenanschlußmaße, nach eigenen Bedürfnissen zu variieren, da diese in jedem Fall vom Hersteller vorgegeben werden. Das zur Herstellung der Krafteinleitungselemente notwendige exakte Fügen der metallischen Teile vor und nach dem eigentlichen Wickel- und Ablegevorgang der mit Kunststoffmatrix getränkten Fasern muß weitgehend manuell und damit zeitaufwendig durchgeführt werden. Beim Anformen des Krafteinleitungselementes an ein Hohlprofil gemäß DE—A—2 926 493 kann die Ablage der Verstärkungsfasern nut mit einem Roving durchgeführt werden, da nur so die Stiftkränze an den Polkappen einwandfrei umschlungen werden. Die Wickelgeschwindigkeit muß zur exakten Fadenablage an dieser Stelle sehr niedrig sein. Diese fertigungstechnischen Gegebenheiten im Bereich des Krafteinleitungselementes schränken die Möglichkeiten einer schnellen Herstellung ein und machen das Fertigungsverfahren unwirtschaftlich.

Aus DE—A—3 408 650 ist ein Krafteinleitungselement der eingangs genannten Art bekannte, zu dessen Bildung das fertige Rohr verformt werden muß. Es weist eine topfförmige, Außenhülse auf, über welche ebenfalls Kräft übertragen werden.

Es besteht die Aufgabe, ein Hohlprofil mit angeformtem Krafteinleitungselement zu schaffen, in welches neben hohen Längszug- und/oder Druckkräften auch hohe Biege- und/oder Torsionsmomente eingeleitet werden können, bzw. ein Verfahren zu dessen Herstellung zu entwikkeln, welches die Fertigung vereinfacht und verkürzt.

Gelöst wird diese Aufgabe dadurch, daß der Mantel aus einer sich über seinem Umfang geschlossen erstreckenden, noch vor ihrem Aushärten zusammen mit der Verstärkung verformten Kunststoffmatrix besteht, und daß der bereits vor dem Spannen des Spreizkörpers ausgehärtete Mantel nur innenseitig Kraft- und Formschluß zu dem Spreizkörper aufweist.

Damit besteht vorteilhafterweise Formschluß zur Einleitung der Zug- und Druckkräfte.

Infolge dieser Gestaltung wird auch erreicht, daß nicht nur große Zug- und Druckkräfte einleitbar sind, sondern auch hohe Biegemomente. Die geometrische Form des Krafteinleitungselementes ist natürlich so zu wählen, daß der Kraftfluß möglichst gleichförmig erfolgt und kontinuierlich in das eigentliche Hohlprofil übergeht. Vorteilhaft ist es daher, die Erweiterung des Hohlprofils in Längsrichtung symmetrisch zu gestalten, wie es durch eine ballige Form oder eine sich konisch erweiternde, dann zylindrisch verlaufende und sich zum Ende des Hohlprofils wieder einschnürende Form eines Doppelkegels gegeben ist. In gleicher Weise ist eine querschnittssymmetrische Form günstig.

Die Erweiterung des Hohlprofils bewirkt eine Vergrößerung des polaren Widerstandsmomentes, wodurch die durch den Fertigungsprozeß unvermeidbare Schwächung des Laminates im Bereich des Krafteinleitungselementes, hervorgerufen durch die Abweichung der Verstärkungsfasern aus ihrer ursprünglichen Orientierung, weitgehend kompensiert wird. Es lassen sich, wie üblich, Rovings, Faserbänder, Streifen, gewebte oder gestrickte Schläuche einsetzen. Als Fasermaterial dient vornehmlich Glas, aber auch alle anderen für Verstärkungszwecke bekannten Fasern auf organischer oder anorganischer Basis, wie sie insbesondere in der Rohrherstellung seit langem Anwendung finden. In üblicher Weise sind die Verstärkungsfasern parallel zur Achse des Hohlprofils ausgerichtet und/oder verlaufen schraubenförmig um das Hohlprofil, Zusätzlich kann die Faserverstärkung auch in Form von Umfangswicklungen vorliegen. Es versteht sich daß dieser allgemeine Verstärkungsaufbau des eigentlichen Hohlprofils sich in das angeformte Krafteinleitungselement forsetzt.

Vorzugsweise liegt der Spreizkörper über die gesamte Länge der Erweiterung formschlüssig an. Es reicht aber auch, wenn er in den sich erweiternden bzw. Verengenden Bereichen der Erweiterung soweit anliegt, daß die zu erwartenden Zug- und Druckkräfte sicher in das Hohlprofil eingeleitet werden. Der Spreizkörper selbst besteht in vorteilhafter Weise aus Kunststoff, wie glasfaserverstärktes Duroplast oder Metall, wie beispielsweise Stahl oder Aluminium. Das Spannglied kann aus gleichem Werkstoff bestehen. Spreizkörper und Spannglied wirken vorzugsweise mittels Konusflächen zusammen. Der Spreizkörper ist beispielsweise in Längsrichtung mehrfach über dem Umfang geschlitzt oder aus einzelnen Lamellen aufgebaut. Die Krafteinleitung in das Hohlprofil erfolgt unmittelbar vom Spannglied über den Spreizkörper durch Formschluß. Eine Verklebung zwischen Spreizkörper und den Innenwandung der Erweiterung brächte keine zusätzlichen Kraftübertragungseigenschaften.

Vorzugsweise beträgt die Länge der Erweiterung das 0,5— bis 1,5-fache des Innendurchmessers des Hohlprofils, insbesondere das 1,0-fache.

Eine weitere besondere Ausführungsform ist gekennzeichnet durch eine mittlere radiale Vergrößerung des Hohlprofildurchmessers auf das 1,2 bis 1,6 fache im Bereich der Erweiterung, vorzugsweise das 1,5-fache.

Schließlich ist es vorteilhaft, wenn der Innendurchmesser der Verengung dem des Hohlprofils entspricht und daß ihre Länge das 0,1- bis 0,5-fache des Hohlprofildurchmessers beträgt, vorzugsweise das 0,25-fache.

Bewegt man sich im Rahmen dieser Abmessungen, so sind optimale Krafteinleitungen zu erwarten.

Eine besonders vorteilhafte Ausführungsform zeigt eine Innenhülse.

Eine solche Innenhülse besteht vorzugsweise aus einem bleibend verformbaren Material, welches bei der Formung des Krafteinleitungselementes mit der Kunststoffmatrix verklebt. Solche Hülsen bieten Schutz gegen die Anschlußelemente. Sofern schädliche Einflüsse zu erwarten sind, wird man den Werkstoff für die Hülsen so wählen, daß diese nicht angegriffen werden.

In einer weiteren Ausführungsform erfolgt eine zusätzliche Armierung durch eine Außenhülse.

Sie besteht vorzugsweise ebenfalls aus langfaserverstärktem Kunststoff mit Umfangswicklungen. Eine derartige Außenhülse ist steif und hat bereits die Form des anzuformenden Krafteinleitungselementes. Sie dient zur Aufnahme hoher radialer Presskräfte, wie sie insbesondere bei der Einleitung von Torsions- und/oder Biegemomenten auftreten.

Vorzugsweise ist im Bereich des Krafteinleitungselementes eines zusätzliche Faserarmierung vorgesehen.

Auf diese Weise gelingt es, die Festigkeit in diesem Bereiche zu erhöhen bzw. dem restlichen Hohlprofil anzugleichen, Dabei wird man diese zusätzlichen Verstärkungen sanft in das eigentliche Hohlprofil übergehen lassen.

Zur Einleitung hoher Torsionsmomente weist die Erweiterung im Querschnitt in einer besonderen Ausführungsform die Kontur eines Polygonzuges auf. Dieser ist beispielsweise sechseckig gestaltet.

Es ist möglich, einzelne Kernteile im Hohlprofil zu belassen. Solche Kernteile können aus Metall, duroplastischen oder thermoplastischen Kunststoffen mit oder ohne Faserverstärkung bestehen.

Das neue Verfahren zum Herstellen dieses neuen Hohlprofils geht aus vom Aufbringen der Verstärkungen auf einen Formkern und gleichzeitigem oder vorherigem Imprägnieren mit einer Kunststoffmatrix, sowie dem Aushärten des Laminates.

Das Neue ist darin zu sehen, daß ein Preßkörper im Bereich des auszuformenden Krafteinleitungselementes nach dem Aufbringen der imprägnierten Verstärkung aufgeweitet wird und die Verstärkung gegen die Wandung eines formgebenden Hohlraumes gedrückt wird, daß nach dem Aushärten der Kunststoffmatrix der Kern entfernt und gegen einen Spreizkörper mit zugehörigem Spannglied ausgetauscht und dieser Spreizkörper derart mittels des Spanngliedes aufgespreizt wird, daß er über die Länge der Erweiterung an dieser innen formschlüssig zum Anliegen gebracht wird.

Auf diese Weise läßt sich das Krafteinleitungselement ohne Schwierigkeiten direkt anformen bzw. montieren, wobei die Faserverstärkung besonders schonend mitverformt wird. Der Deformationsdruck läßt sich hydraulisch, pneumatisch oder mechanisch aufbringen.

Vorzugsweise werden im Bereich des auszuformenden Krafteinleitungselementes zusätzliche Faserverstärkungen aufgebracht.

Diese Maßnahme paßt sich ohne Schwierigkeiten in den Verfahrensablauf ein. Die in Längsrichtung des Hohlprofils angeordneten Fasern sind möglichst derart gelegt, daß sie später im Bereich der Erweiterung noch bündig liegen. Bewicklungen, welche unter mittleren Wickelwinkeln zwischen 30° und 60° bezüglich der Achse des Hohlprofils verlaufen, insbesondere also unter 45° verlaufende Fasern zur Schubkraftaufnahme, werden im Bereich des Krafteinleitungselementes unter einen von diesem genannten Winkel abweichenden Winkel abgelegt, und zwar in der Weise, daß sie sich beim Aufweitungsvorgang des noch nassen Laminates auf 45° einstellen. Anstelle von Fasersträngen läßt sich auch ein diagonal gewebter Faserschlauch verwenden, welcher über den Kern gezogen wird. Im Bereich der späteren Erweiterung wird der Faserschlauch vorzugsweise gerafft, so daß beim Erweitern genügend Material zur Verfügung steht.

Gemäß einer besonderen Durchführungsform des Verfahrens wird im Bereich des auszuformenden Krafteinleitungselementes eine bleibend verformbare Innenhülse und/oder steife Außenhülse vorgesehen.

Wegen der bleibenden Verformbarkeit der Innenhülse läßt sich diese ohne Schwierigkeiten im gleichen Fertigungsgang des Ausformens des Krafteinleitungselementes mitverformen.

Eine steife Außenhülse wird nach Aufbringen der imprägnierten Verstärkungsfasern vor dem Fertigungsprozeß des Ausformens des Krafteinleitungselementes aufgeschoben.

In der Zeichnung ist das neue Hohlprofil in zwei Ausführungsbeispielen rein schematisch dargestellt:

Es zeigen:

Fig. 1 einen Schnitt gemäß Linie A—B in Fig. 2 durch ein Krafteinleitungselement eines Hohlprofils gemäß einer ersten Ausführungsform,

Fig. 2 einen Längsschnitt durch einen Abriß dieses Hohlprofils einschließlich des angeformten Krafteinleitungselementes und

Fig. 3 einen Längsschnitt durch ein Hohlprofil mit Krafteinleitungselement gemäß einer zweiten Ausführungsform und zwar sowohl vor der Anformung des Krafteinleitungselementes als auch nach dessen Anformung.

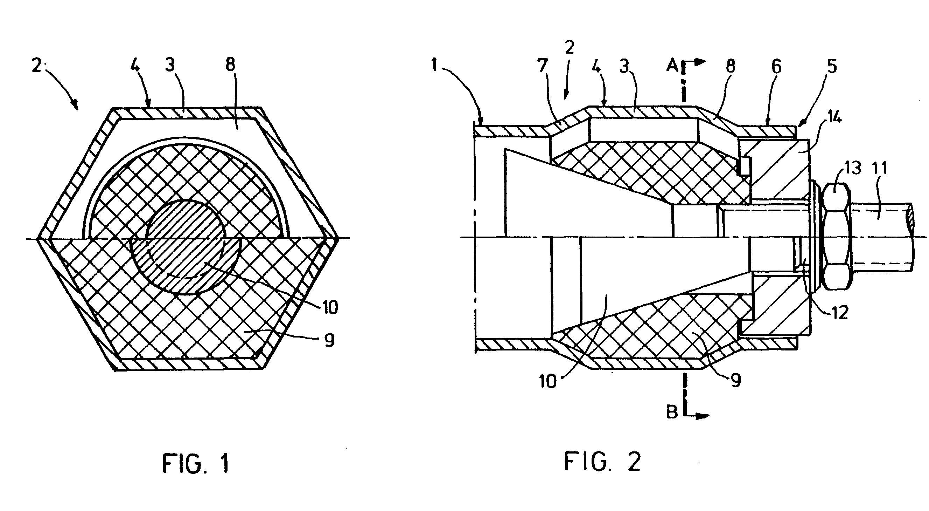

In Fig. 1, 2 besteht das Hohlprofil 1 aus diesem selbst mit einem angeformten Krafteinleitungselement 2. Es besteht aus Polyesterharz mit eingebetteten Glasfaserverstärkungseinlagen. Sein aus dem Laminat bestehender Mantel 3 ist als radiale Erweiterung 4 des Hohlprofils 1 gestaltet, welche zu ihrem freien Ende 5 hin wieder in eine Verengung 6 übergeht. Die Länge der radialen Erweiterung 4 einschließlich ihrer Anschrägungen 7 und 8 beträgt etwa das 1,0-fache des Innendurchmessers des Hohlprofils 1. Die radiale Erweiterung 4 ist außerdem gekennzeichnet durch eine mittlere radiale Vergrößerung des Hohlprofildurchmessers auf das ca. 1,3-fache desjenigen des Hohlprofils 1. Der Mantel 3 der Erweiterung 4 ist in Form eines Polygonzuges sechseckig gestaltet. Der Mantel 3 umschließt einen Spreizkörper 9 aus Aluminium, auf welchen ein Spannglied 10 einwirkt. Dieses geht in einen Zuganker 11 über, der in einem nicht dargestellten Fundament verankert ist. Dieser weist ein Gewinde 12 mit Mutter 13 auf. Durch Anziehen der Mutter 13 drückt das Spannglied 10 den Spreizkörper 9 gegen eine Spannscheibe 14, so daß der Spreizkörper 9 nach außen in die Erweiterung 3 gepreßt wird, wie es in Fig. 2 unterhalb der Mittelachse dargestellt ist. Oberhalb der Mittelachse sind der Spreizkörper 9 und das Spannglied 10 im Ausgangszustand gezeigt.

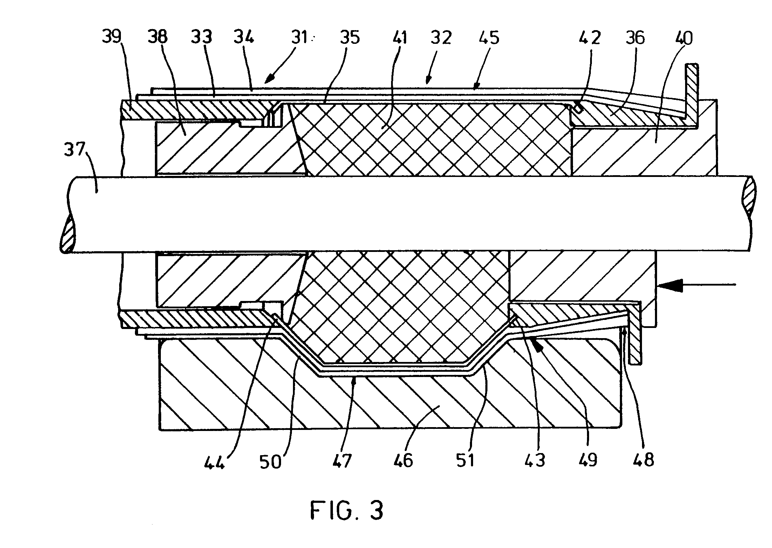

In Fig. 3 besteht das Hohlprofil 31, von welchem nur ein Abriß mit dem Krafteinleitungselement 32 dargestellt ist, aus einer mit Polyesterharz getränkten, unter 45° gewickelten Lage 33 aus Glasfaserrovings, sowie aus einer darüber in Längsrichtung gelegten Lage 34 aus unidirektional verstärktem Material, das ebenfalls mit Polyesterharz getränkt ist. Was den weiteren Aufbau des Hohlprofils 31 betrifft, ist im Bereich des Krafteinleitungselementes 32 eine Innenhülse 35 aus plastisch verformbarem Material vorgesehen. Ein metallisches Flanschstück 36 ist Teil des Herstellungskerns. Es wird nach dem Aushärten des Laminates entfernt. Zur Herstellung des Hohlprofils 31 bedient man sich einer drehbaren Zentralwelle 37, auf welcher Lagerbuchsen 38 (nur eine ist dargestellt) angeordnet sind, zwischen denen ein Kernrohr 39 (Wickelrohr) eingespannt ist. Auf der Zentralwelle 37 ist noch im Bereich des Flanschstückes 36 eine weitere Lagerbuchse 40 vorgesehen, welche durch Druckbeaufschlagung samt Flanschstück 36 auf der Zentralwelle 37 verschiebbar ist. Zwischen den Lagerbuchsen 38 und 40 ist ein Preßkörper 41 aus Polyurethan- Elastomer angeordnet. Das Flanschstück 36 weist eine Ringnut 42 auf, in welcher der Rand 43 der Innenhülse 35 gelagert ist. Der zweite Rand 44 der Innenhülse 35 ist zwischen der Lagerbuchse 38 und dem Kernrohr 39 eingespannt. In Fig. 3 ist das Hohlprofil 31 oberhalb dessen Mittelachse vor dem Anformen des Krafteinleitungselementes 32 dargestellt und unterhalb der Mittelachse in angeformtem Zustand, wobei durch die Verschiebung der Lagerbuchse 40 der Preßkörper 41 verformt wird und dadurch das Krafteinleitungselement 32 ausgeformt wird, indem der Preßkörper 41 einen Mantel 45 aus den Lagen 33 und 34 sowie der Innenhülse 35 in ein entsprechend gestaltetes Formwerkzeug 46 drückt. Dieser Mantel 45 besteht aus einer Erweiterung 47 und zum freien Ende 48 des Krafteinleitungselementes 32 hin aus einer Verengung 49, wobei beiderseits der Erweiterung 47 Anschrägungen 50, 51 für Übergangsbereiche sorgen.

## Patentansprüche

1. Hohlprofil (1, 31), insbesondere ein Rohr, aus langfaserverstärktem Kunststoff, welches an mindestens einem Ende ein integriertes Krafteinleitungselement (2, 32) aufweist, dessen Mantel (3, 45) aus einem Abschnitt des Hohlprofils (1, 31) selbst besteht, und wobei dieser Mantel (3, 45) einen Kern (9) mit Zuganker (10) umgibt, und aus einer sich über den Umfang erstreckenden radialen Erweiterung (4, 47) des Hohlprofils (1, 31), besteht, welche an ihrem freien Ende (5, 48) wieder in eine Verengung (6, 49) übergeht; wobei der Kern (9) als Spreizkörper (9) ausgebildet, ist, welcher mit dem darin geführten, als Spannglied (10) ausgebildeten Ende des Zugankers (11) korrespondiert, und wobei der Spreizkörper (9) in gespanntem Zustand über die Länge der Erweiterung (4, 47) an dieser innen formschlüssig anliegt, dadurch gekennzeichnet, daß der Mantel (3, 45) aus einer sich über seinen Umfang geschlossen erstreckenden, noch vor ihrem Aushärten zusammen mit der Verstärkung verformten Kunststoffmatrix besteht, und daß der bereits vor dem Spannen des Spreizkörpers (9) ausgehärtete Mantel (3, 45) nur innenseitig Kraft- und Formschluß zu dem Spreizkörper (9) aufweist.

2. Hohlprofil nach Anspruch 1, dadurch gekennzeichnet, daß die Länge der Erweiterung (4, 47) das 0,5- bis 1,5-fache des Innendurchmessers des Hohlprofils (1, 31) beträgt.

3. Hohlprofil nach Anspruch 1 oder 2, gekennzeichnet durch eine mittlere radiale Vergrößerung des Hohlprofilinnendurchmessers auf das 1,2- bis 1,6-fache im Bereich der Erweiterung (4, 47).

4. Hohlprofil nach einem der Ansprüche 1 bis 3, dadurch gekennzeichnet, daß der Innendurchmesser der Verengung (6, 49) demjenigen des Hohlprofils (1, 31) entspricht und daß die Länge der Verengung (6, 49) das 0,1- bis 0,5-fache des Hohlprofilinnendurchmessers beträgt.

5. Hohlprofil nach einem der Ansprüche 1 bis 4, gekennzeichnet durch eine Innenhülse (35) und/ oder Außenhülse im Bereich der Erweiterung (47).

6. Hohlprofil nach einem der Ansprüche 1 bis 5, gekennzeichnet durch zusätzliche Faserarmierung im Bereich des Krafteinleitungselementes (2, 32).

7. Hohlprofil nach einem der Ansprüche 1 bis 6, dadurch gekennzeichnet, daß die Erweiterung (4) im Querschnitt die Kontur eines Polygonzuges aufweist.

8. Verfahren zum Herstellen eines Hohlprofils nach Anspruch 1 durch Aufbringen der Verstärkungen (33; 34) auf einen Formkern (39; 41; 36) und gleichzeitigem oder vorherigem Imprägnieren mit einer Kunststoffmatrix, sowie dem Aushärten des Laminates, dadurch gekennzeichnet, daß ein Preßkörper (41) im Bereich des auszuformenden Krafteinleitungselementes (2, 32) nach dem Aufbringen der imprägnierten Verstärkung (33; 34) aufgeweitet wird und die Verstärkung (33; 34) gegen die Wandung eines formgebenden Hohlraumes (46) gedrückt wird, daß nach dem Aushärten der Kunststoffmatrix der Kern (41) entfernt und gegen einen Spreizkörper (9) mit zugehörigem Spannglied (10) ausgetauscht und dieser Spreizkörper (9) derart mittels des Spanngliedes (10) aufgespreizt wird, daß er über die Länge der Erweiterung (4, 47) an dieser innen Kraft- und formschlüssig zum Anliegen gebracht wird.

9. Verfahren nach Anspruch 8, dadurch gekennzeichnet, daß im Bereich des auszuformenden Krafteinleitungselementes (2, 32) zusätzliche Faserverstärkungen aufgebracht werden.

10. Verfahren nach einem der Ansprüche 8 oder 9, dadurch gekennzeichnet, daß im Bereich des auszuformenden Krafteinleitungselementes (2, 32) eine steife Außenhülse und/oder bleibend verformbare Innenhülse (35) vorgesehen wird.

**Revendications**

1. Profilé creux (1, 31), an particulier tube, en matière plastique renforcée par des fibres longues, qui présente à au moins une extrémité un élément intégré d'application d'efforts (2, 32) dont la paroi latérale (3, 45) est formée d'un segment du profilé creux (1, 31) lui-même, cette paroi latérale (3, 45) entourant un noyau (9) avec un tirant (10) et étant formée d'un élargissement (4, 47) radial du profilé creux (1, 31), s'étendant sur la périphérie, élargissement qui se raccorde de nouveau à un rétrécissement (6, 49) à son extrémité libre (5, 48); le noyau (9) étant réalisé comme une pièce d'écartement (9) qui correspond à l'extrémité du tirant (11) guidée dans cette pièce et réalisée comme un organe de serrage (10), et dans lequel la pièce d'écartement (9) à l'état tendu s'applique à complémentarité de formes contre l'intérieur de l'élargissement (4, 47), sur la longueur de celui-ci, caractérisé en ce que la paroi latérale (3, 45) est constituée d'une matrice de matière plastique s'étendant de façon fermée sur sa périphérie et qui est déformée avant même son durcissement, ensemble avec l'armature, et que la paroi latérale (3, 45), déjà durcie avant que ne soit serrée la pièce d'écartement (9), présente seulement du côté intérieur une liaison par action de force et mécanique avec la pièce d'écartement (9).

2. Profilé creux selon la revendication 1, caractérisé en ce que la longueur de l'élargissement (4, 47) correspond à 0,5—1,5 fois le diamètre intérieur du profilé creux (1, 31).

3. Profilé creux selon la revendication 1 ou 2, caractérisé par un agrandissement radial moyen du diamètre intérieur du profilé creux à 1,2—1,6 fois dans la région de l'élargissement (4, 47).

4. Profilé selon une des revendications 1 à 3, caractérisé en ce que le diamètre intérieur du rétrécissement (6, 49) correspond à celui du profile creux (1, 31) et que la longueur du rétrécissement (6, 49) correspond à 0,1—0,5 fois le diamètre intérieur du profilé creux.

5. Profilé creux selon une des revendications 1 à 4, caractérisé par un manchon intérieur (35) et/ou un manchon extérieur dans la région de l'élargissement (47).

6. Profilé creux selon une des revendications 1 à 5, caractérisé par une armature de fibres supplémentaire dans la région de l'élément d'application d'efforts (2, 32).

7. Profilé creux selon une des revendications 1 à 6, caractérisé en ce que l'élargissement (4) présente un profil polygonal en section droite.

8. Procédé pour fabriquer un profilé creux selon la revendication 1 par la mise en place des renforcements (33; 34) sur un noyau de formage (39; 41; 36) et l'imprégnation simultanée ou préalable avec une résine destinée à former la matrice de matière plastique, ainsi que le durcissement du stratifié, caractérisé en ce qu'il comprend, après la mise en place de l'armature imprégnée (33; 34) l'expansion d'une pièce de pressage (41) dans la région de l'élément d'application d'efforts (2, 32) à former et le pressage de l'armature (33; 34) contre la paroi d'une empreinte de moulage (46), de même que, après le durcissement de la matrice de matière plastique, l'enlèvement du noyau (41) et son remplacement par une pièce d'écartement (9) avec un organe de serrage (10) correspondant, cette pièce d'écartement (9) étant écartée de telle manière, au moyen de l'organe de serrage (10), il est appliqué contre l'intérieur de l'élargissement (4, 476, sur la longueur de celui-ci, en établissant avec lui une liaison par action de force et mécanique.

9. Procédé selon la revendication 8, caractérisé en ce que des armature de fibres supplémentaires sont disposées dans la région de l'élément d'application d'efforts (2, 32) à former.

10. Procédé selon la revendication 8 ou 9, caractérisé en ce qu'un manchon extérieur rigide et/ou un manchon intérieur (35) susceptible d'être déformé de façon permanente, sont prévus dans la région de l'élément d'application d'efforts (2, 32) à former.

**Claims**

1. A hollow section member (1, 31), more particularly a tube, of long fibre-reinforced plastics, comprising an integrally-formed force-introducing element (2, 32) at at least one end and having a jacket (3, 45) comprising a portion of the hollow member (1, 31), the jacket (3, 45) surrounding a core (9) and tie rod (10) and comprising a peripherally extending radial wide part (4, 47) of the hollow member (1, 31) merging at its free end (5, 48) into a constriction (6, 49); the core (9) is an expanding member (9) which surrounds, guides and co-operates with the end of the tie rod (11) in the form of a tension element (10), and when the expanding member (9) is in the tensioned state it positively abuts against the interior of the wide part (4, 47) along its length, characterised in that the jacket (3, 45) comprises a plastics matrix which is continuous around its periphery and is shaped together with the reinforcement before hardening, and only the inner side of the jacket (3, 45) which is hardened before tensioning the expanding member (9), is in positive and non-positive contact with the expanding member (9).

2. A hollow member according to claim 1, characterised in that the length of the wide part (4, 47) is 0.5 to 1.5 times the inner diameter of the hollow member (1, 31).

3. A hollow member according to claim 1 or 2, characterised by an average radial increase in the inner diameter of the hollow member by a factor of 1.2 to 1.6 in the region of the wide part (4, 47).

4. A hollow member according to any of claims 1 to 3, characterised in that the inner diameter of the constriction (6, 49) is equal to that of the hollow member (1, 31) and the length of the constriction (6, 49) is 0.1 to 0.5 times the inner diameter of the hollow member.

5. A hollow member according to any of claims 1 to 4, characterised by an inner sleeve (35) and/or an outer sleeve in the region of the wide part (47).

6. A hollow member according to any of claims 1 to 5, characterised by additional fibre reinforcement in the region of the force-introducing element (2, 32).

7. A hollow member according to any of claims 1 to 6, characterised in that the wide part (4) in cross-section has the contour of a series of polygons.

8. A method of manufacturing a hollow member according to claim 1 by disposing reinforcements (33; 34) on a moulding core (39; 41; 36) and simultaneously or previously impregnating with a plastics matrix and hardening the laminate, characterised in that after the impregnated reinforcement (33; 34) is positioned, a pressed member (41) is widened in the region where the force-introducing element (2, 32) is to be formed and the reinforcement (33; 34) is pressed against the wall of a shaping cavity (46); after the plastics matrix hardens the core (41) is removed and replaced by an expanding member (9) and associated tension element (10), and the expanding member (9) is expanded by the tension element (10) so as to be brought positively and non-positively into engagement with the interior of the wide part (4, 47) along its length.

9. A method according to claim 8, characterised in that additional fibre reinforcements are disposed in the region where the force-introducing element (2, 32) is to be formed.

10. A method according to claim 8 or 9, characterised in that a rigid outer sleeve and/or a permanently deformable inner sleeve (35) are provided in the region where the force-introducing element (2, 32) is to be formed.

FIG. 1

FIG. 2

EP 0 311 837 B1

FIG. 3

EP 0 311 837 B1